# DEMANDE DE BREVET EUROPEEN

(11) **EP 0 751 308 A1**
(43) Date de publication de la demande: **02.01.1997**
(21) Numéro de dépôt: 96401246.2
(22) Date de dépôt: 10.06.1996
(51) Int. Cl.: F16B 37/04

(54) **Ecrou à fût taraudé monté flottant dans une cage**

(30) Priorité: 29.06.1995 FR 9507848
(71) Demandeur: RAPID S.A., F-75017 Paris (FR)
(72) Inventeur: Leon, Jean-Pierre, 78800 Houilles (FR)
(74) Mandataire: Durand, Yves Armand Louis

(57) **Abrégé**

La présente invention concerne un écrou à fût taraudé monté flottant dans une cage.

Cet écrou comprend une première branche (3) avec lumière oblongue (5) dans laquelle peut se débattre longitudinalement le fût taraudé (1) de l'écrou, une deuxième branche (4) avec lumière oblongue (7) parallèle à la première lumière oblongue (5), et une troisième branche (8) avec lumière oblongue (9), et repliée sous la deuxième branche (4) pour former avec elle une pince insérable sur le bord d'un panneau, étant entendu que l'écrou à fût taraudé (1) est retenu entre la première branche (3) et la deuxième branche (4).

Cet écrou encagé permet l'assemblage de pièces quelconques telles que par exemple des panneaux.

## Description

La présente invention a essentiellement pour objet un écrou à fût taraudé monté flottant dans une cage et permettant l'assemblage de pièces diverses telles que par exemple des panneaux.

On a déjà proposé depuis longtemps des écrous montés flottants dans une cage qui présente, d'une manière générale, la forme d'un U entre les branches duquel est retenu l'écrou proprement dit.

Toutefois, le degré de liberté de l'écrou par rapport à la cage est très minime et la cage, qui est généralement insérée sur le bord d'un panneau ou autre pièce quelconque comportant un orifice, doit être montée sur ce panneau très précisément au droit dudit orifice, de façon qu'au montage, il y ait concordance entre l'orifice du panneau, un orifice de la cage et l'orifice taraudé de l'écrou. En d'autres termes, il n'y a pas de liberté de montage de l'écrou encagé par rapport à l'orifice ménagé dans le panneau qui, tout comme la cage de l'écrou, doit être traversé par une vis permettant l'assemblage.

La présente invention a pour but de remédier à ces inconvénients en proposant un écrou encagé dont le montage sur la pièce à assembler avec une autre pièce n'a pas besoin d'être effectué avec précision, ce qui facilite le travail et réduit les coûts de main-d'oeuvre.

A cet effet, l'invention a pour objet un écrou à fût taraudé solidaire d'une embase et monté flottant dans une cage formée par les deux branches d'un élément en forme de U, caractérisé en ce que l'une ou première branche du U comporte une première lumière oblongue dans laquelle peut se débattre longitudinalement le fût taraudé de l'écrou, en ce que l'autre ou deuxième branche du U comporte une deuxième lumière oblongue sensiblement parallèle et identique à première lumière oblongue, et en ce que la deuxième branche du U est prolongée par une troisième branche repliée sous la deuxième branche pour former avec elle une pince insérable sur le bord d'un panneau ou analogue, ladite troisième branche comportant une troisième lumière oblongue parallèle et identique aux deux autres pour ainsi permettre une concordance de l'écrou avec un orifice ménagé dans le panneau, et donc la concordance de la vis traversant cet orifice et les lumières oblongues précitées avec le fût taraudé de l'écrou.

Selon une autre caractéristique de l'invention, la première branche du U est repliée en forme de dièdre ouvert du côté de l'extérieur et dont l'arête est parallèle à la direction longitudinale des trois lumières oblongues précitées.

L'écrou suivant cette invention est encore caractérisé en ce que la deuxième branche du U comporte des languettes découpées faisant saillie à l'intérieur de la pince constituée par la deuxième et la troisième branches, et orientées vers le fond de ladite pince.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue agrandie et en perspective d'un écrou encagé conforme aux principes selon cette invention.

La figure 2 est une vue en coupe suivant la ligne II-II de la figure 1.

La figure 3 est une vue en coupe identique à la figure 2, mais montrant en outre deux pièces ou panneaux assemblés à l'aide de l'écrou selon cette invention.

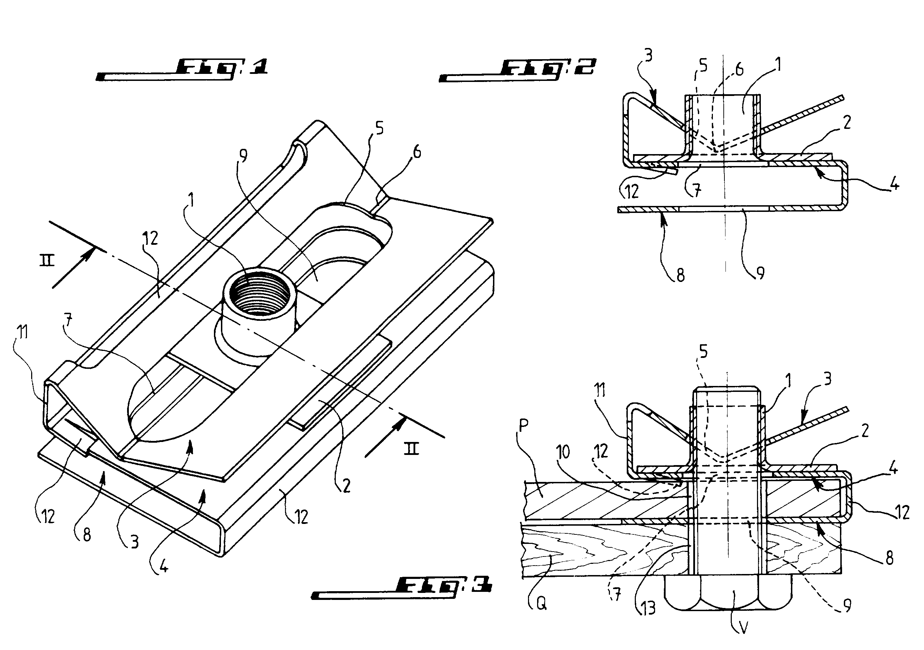

On voit clairement sur les figures 1 et 2 notamment un écrou se composant essentiellement d'un fût taraudé 1 solidaire d'une embase 2 retenue entre les deux branches 3 et 4 d'un élément présentant grossièrement, en section transversale, la forme d'un U. Les branches 3 et 4, comme on le voit bien sur la figure 1 forment en quelque sorte une cage pour l'écrou qui vient d'être décrit.

Conformément à l'invention, l'une ou première branche 3 du U constitué par les branches repliées 3 et 4, comporte une première lumière oblongue 5 dans laquelle peut se débattre longitudinalement le fût taraudé 1 de l'écrou retenu par son embase 2 entre les branches 3 et 4. On remarquera ici que, suivant un mode de réalisation préféré, la branche 3 est elle-même repliée pour former en quelque sorte un dièdre qui est ouvert du côté extérieur de la cage formée par les branches 3 et 4 et dont l'arête 6 est parallèle à la direction longitudinale de la lumière oblongue 5. Ainsi, l'écrou à fût taraudé 1 pourra être aisément introduit par son embase 2 au travers de la lumière oblongue 5 pour se positionner entre les branches 3 et 4.

La branche 4 formant la deuxième branche du U comporte une deuxième lumière oblongue 7 qui est sensiblement parallèle et identique à la première lumière oblongue 5.

La branche 4, comme il apparaît clairement sur les dessins, est prolongée par une troisième branche 8 repliée sous la branche 4 et formant avec elle une pince insérable sur le bord d'un panneau ou analogue P bien visible sur la figure 3.

Dans la troisième branche 8 est ménagée une troisième lumière oblongue 9 qui est sensiblement parallèle et identique aux deux autres lumières 5 et 7.

Comme on le voit sur la figure 2, l'écrou encagé qui vient d'être décrit présente donc une forme de S dont deux branches 3, 4 permettent la retenue de l'écrou à fût taraudé 1, et dont les branches 4 et 8 forment une pince pour retenir l'écrou encagé sur le bord d'un panneau P pourvu d'un orifice repéré en 10 sur la figure 3. La première branche 3 est réunie à la deuxième branche 4 par une partie 11 munie, suivant l'exemple représenté, d'une fente 12 permettant de diminuer la matière, et la deuxième branche 4 est réunie à la troisième branche 8 par une partie 12 formant le fond de la pièce constituée par ces deux branches.

Suivant l'exemple représenté, les parties 11 et 12 sont parallèles entre elles et à l'arête 6 qui est elle-même parallèle à la direction longitudinale des trois lumières oblongues 5, 7, 9.

Revenant à la branche 4, on voit sur les dessins qu'elle comporte des languettes découpées 12 qui prennent naissance dans la partie 11 raccordant la branche 3 à la branche 4 et qui font saillie à l'intérieur de la pince constituée par les branches 4 et 8. Ces languettes 12 sont orientées vers le fond de la pince, c'est-à-dire vers la partie 12 raccordant la branche 4 à la branche 8. Elles permettent avantageusement la retenue par accrochage du panneau P, lorsque la pince constituée par les branches 4 et 8 est insérée sur le bord de ce panneau, comme cela apparaît sur la figure 3.

On comprend donc de la description qui précède que, du fait de la lumière oblongue 9 prévue dans la branche 8 et de la lumière oblongue 7 prévue dans la branche 4, le montage n'aura pas besoin d'être effectué avec précision par rapport à l'orifice 10 du panneau P. En bref, l'orifice 10 tombera toujours dans les lumières oblongues 9 et 7.

Lorsque l'insertion de la pince sur le panneau P est réalisée, et si l'on veut assembler le panneau P avec par exemple un autre panneau Q comportant un orifice 13, comme on le voit bien sur la figure 3, il suffira de faire passer une vis V au travers des deux panneaux, étant entendu que l'écrou à fût taraudé 1 pouvant se débattre librement dans la lumière oblongue 5 appartenant à la branche 3 aura été facilement mis en alignement avec l'axe de la vis V et des trous 10 et 13 dans les panneaux P et Q respectivement. C'est dire que la vis V pourra être vissée dans le fût taraudé 1.

On a donc réalisé suivant l'invention un écrou encagé ne nécessitant aucune précaution de montage spéciale et permettant avantageusement de réaliser immédiatement l'alignement ou la concordance de l'écrou proprement dit avec les orifices des panneaux à assembler et donc l'alignement et la concordance de la vis traversant ces orifices et les lumières oblongues 5, 7, 9 avec le fût taraudé 1 de l'écrou.

Bien entendu, l'invention n'est nullement limitée au mode de réalisation décrit et illustré qui n'a été donné qu'à titre d'exemple.

C'est ainsi que l'écrou encagé selon cette invention peut être monté sur des pièces quelconques et être réalisé en toute matière appropriée quelconque et repliable pour ce qui concerne la cage, comme par exemple en acier à ressort.

Cette invention comprend donc tous les équivalents techniques des moyens décrits ainsi que leurs combinaisons si celles-ci entrent dans le cadre des revendications qui suivent.

## Revendications

1. Ecrou à fût taraudé (1) solidaire d'une embase (2) et monté flottant dans une cage formée par les deux branches (3, 4) d'un élément en forme de U, caractérisé en ce que l'une ou première branche (3) du U comporte une première lumière oblongue (5) dans laquelle peut se débattre longitudinalement le fût taraudé (1) de l'écrou, en ce que l'autre ou deuxième branche (4) du U comporte une deuxième lumière oblongue (7) sensiblement parallèle et identique à la première lumière oblongue (5), et en ce que la deuxième branche (4) du U est prolongée par une troisième branche (8) repliée sous la deuxième branche (4) pour former avec elle une pince insérable sur le bord d'un panneau ou analogue (P), ladite troisième branche (8) comportant une troisième lumière oblongue (9) parallèle et identique aux deux autres (5, 7) pour ainsi permettre une concordance de l'écrou avec un orifice (10) ménagé dans le panneau (P), et donc la concordance de la vis (V) traversant cet orifice et les lumières oblongues (5, 7, 9) avec le fût taraudé (1) de l'écrou.

2. Ecrou selon la revendication 1, caractérisé en ce que la première branche (3) du U est repliée en forme de dièdre ouvert du côté de l'extérieur et dont l'arête (6) est parallèle à la direction longitudinale des trois lumières oblongues précitées (5, 7, 9).

3. Ecrou selon la revendication 1 ou 2, caractérisé en ce que la deuxième branche (4) comporte des languettes découpées (12) faisant saillie à l'intérieur de la pince constituée par la deuxième (4) et la troisième branche (8), et orientées vers le fond (12) de cette pièce.
